# EUROPEAN PATENT SPECIFICATION

(11) **EP 4 310 348 B1**
(45) Date of publication and mention of the grant of the patent: **24.06.2026**
(21) Application number: 21931760.9
(22) Date of filing: 23.12.2021
(51) Int. Cl.: F16B 25/04, F16B 33/06

(54) **TAPPING SCREW AND FASTENING STRUCTURE USING SAME**
GEWINDEBOHRSCHRAUBE UND BEFESTIGUNGSSTRUKTUR DAMIT
VIS TARAUDEUSE ET STRUCTURE DE FIXATION L'UTILISANT

(30) Priority: 19.03.2021 JP 2021046326
(43) Date of publication of application: 24.01.2024
(73) Proprietor: YAMASHINA CORPORATION, Kyoto-shi, Kyoto 607-8155 (JP); Alps Alpine Co., Ltd., Tokyo 145-8501 (JP)
(72) Inventor: TAKAGI, Kazuki, Kyoto-shi, Kyoto 607-8155 (JP); KOBAYASHI, Takuya, Kyoto-shi, Kyoto 607-8155 (JP); KOIZUMI, Hiroyuki, Tokyo 145-8501 (JP)
(74) Representative: Gamba, Alessandro
(86) International application number: PCT/JP2021/047875
(87) International publication number: WO 2022/196018

(56) References cited:
- JP-A- 2001 247 937
- JP-A- 2003 322 118
- JP-A- 2012 112 476
- JP-A- 2013 142 461
- JP-A- 2014 062 324
- JP-A- 2017 180 637
- JP-A- 2018 044 574
- JP-U- S6 240 319
- US-A1- 2015 139 751
- US-A1- 2017 241 466

## Description

### Technical Field

The present invention relates to a tapping screw, and particularly to a tapping screw capable of suppressing generation of chips when the tapping screw is screwed into a pilot hole of a mating material.

### Background Art

Conventionally, as a tapping screw to be screwed into a mating material, for example, there is a tapping screw disclosed in a patent application related to a high-strength screw and a high-strength steel (see Patent Literature 1). As an example of the tapping screw, a tapping screw having a surface galvanized to prevent corrosion of iron is disclosed.

A self-drilling screw produced from an austenitic or other stainless steel, comprising a shank having a thread-forming region and a drilling or penetrating tip is known from Patent Literature 2.

### Citation List

### Patent Literature

Patent Literature 1: JP 2001-247937 A
Patent Literature 2: US 2015/0139751 A1

### Summary of Invention

### Technical Problem

However, when the tapping screw is screwed into the pilot hole of the mating member in order to fix the object to be fastened, chips are likely to be generated. Then, when the chips fall and accumulate on, for example, a printed circuit board on which electronic components and the like are disposed, there is a problem that the electronic components and the like are short-circuited and damaged. In particular, as the integration degree of the electronic components disposed on a printed circuit board increases, it is strongly desired to reduce the size and the number of chips generated.

In view of the above problems, an object of the present invention is to provide a tapping screw capable of reducing the size and the number of chips generated, and a fastening structure using the tapping screw.

### Solution to Problem

In order to solve the above problem, a tapping screw according to the present invention is
a tapping screw to be screwed into a pilot hole of a mating material, the tapping screw including: a head; and a shank including a screw threaded portion having at least a single-start thread,
wherein a surface roughness at least at a crest of the screw threaded portion is configured to be set to a maximum height roughness (Rz) of 1.0 or less, preferably 0.8 or less. Advantageous Effects of Invention

According to the present invention, since the irregularities at least at the crest of the screw threaded portion are small, there is an effect that the female screw can be formed by plastically deforming the inner peripheral surface of the pilot hole of the mating material without scraping, and the generation of chips can be suppressed.

According to the present invention, the surface roughness at least at the crest of the screw threaded portion is set to an arithmetic mean roughness (Ra) of 0.2 or less.

According to the present embodiment, since the irregularities at least at the crest of the screw threaded portion are small, the female screw can be formed by plastically deforming the inner peripheral surface of the pilot hole of the mating material without scraping, and the generation of chips can be suppressed.

As another embodiment of the present invention, it is necessary to make a surface hardness at least at a crest of a screw threaded portion larger than a surface hardness at an inner peripheral surface of a pilot hole of a mating material.

According to the present embodiment, since the surface hardness at the crest of the screw threaded portion is large, the female screw can be formed by plastically deforming the inner peripheral surface of the pilot hole of the mating material, and the generation of chips can be suppressed.

As a different embodiment of the present invention, a surface hardness at least at a crest of a screw threaded portion may be a Vickers hardness (Hv) of 350 or more, preferably 500 or more.

According to the present embodiment, the surface hardness at least at the crest of the screw threaded portion is larger than the surface hardness of the mating material. Therefore, since the crest of the screw threaded portion can plastically deform the inner peripheral surface of the pilot hole of the mating material to form the female screw, it is possible to suppress the generation of chips.

In particular, when the crest of the screw threaded portion has a Vickers hardness (Hv) of 350 or more, the crest of the screw threaded portion is harder than a steel material having a Vickers hardness (Hv) of 100 to 250. Therefore, since the screw threaded portion itself of the tapping screw is not scraped, the female screw can be formed without generating chips.

As another embodiment of the present invention, the surface hardness at least at the crest of the screw threaded portion may be set to a nanoindentation hardness (HIT) of 3500 or more, preferably 5000 or more.

According to the present embodiment, the surface hardness at least at the crest of the screw threaded portion is larger than the surface hardness of the mating material. Therefore, since the crest of the screw threaded portion can plastically deform the inner peripheral surface of the pilot hole of the mating material to form the female screw, it is possible to suppress the generation of chips.

As another embodiment of the present invention, in a crest of a screw threaded portion having a shank with a substantially triangular cross section, a surface roughness in at least a corner portion may be set to a maximum height roughness (Rz) of 1.0 or less, preferably 0.8 or less.

According to the present embodiment, the irregularities of the crest positioned at the corner portion are small. Therefore, since the crest of the screw threaded portion plastically can deform the inner peripheral surface of the pilot hole of the mating material without scraping to form the female screw, it is possible to suppress the generation of chips.

It should be noted that the corner portion refers to a portion that protrudes farthest outward from the axis of the shank in the cross section of the shank. The side portion refers to a portion positioned between adjacent corner portions in the cross section of the shank. The crest refers to a series of highest portions of the screw threaded portion.

As a different embodiment of the present invention, in a crest of a screw threaded portion having a shank with a substantially triangular cross section, a surface roughness in at least a corner portion may be set to an arithmetic mean roughness (Ra) of 0.3 or less, preferably 0.2 or less.

According to the present embodiment, the irregularities of the crest positioned at the corner portion are small. Therefore, since the crest positioned at the corner portion can plastically deform the inner peripheral surface of the pilot hole of the mating material to form the female screw, it is possible to suppress the generation of chips.

As another embodiment of the present invention, in a crest of a screw threaded portion having a shank with a substantially triangular cross section, a surface hardness in at least a corner portion may be set to a Vickers hardness (Hv) of 350 or more, preferably 500 or more.

According to the present embodiment, the surface hardness of the crest positioned at the corner portion is large. Therefore, since the crest positioned at the corner portion can plastically deform the inner peripheral surface of the pilot hole of the mating material to form the female screw, it is possible to suppress the generation of chips.

In particular, when the crest of the screw threaded portion has a Vickers hardness (Hv) of 350 or more, the crest of the screw threaded portion is harder than a steel material having a Vickers hardness (Hv) of 100 to 250. Therefore, since the screw threaded portion itself of the tapping screw is not scraped, the female screw can be formed without generating chips.

As another embodiment of the present invention, in a crest of a screw threaded portion having a shank with a substantially triangular cross section, a surface hardness in at least a corner portion may be set to a nanoindentation hardness (HIT) of 3500 or more, preferably 5000 or more.

According to the present embodiment, the surface hardness of the crest positioned at the corner portion is large. Therefore, since the crest positioned at the corner portion can plastically deform the inner peripheral surface of the pilot hole of the mating material to form the female screw, it is possible to suppress the generation of chips.

As a different embodiment of the present invention, the surface roughness of the flank surface of the screw threaded portion may be equal to or higher than the surface roughness of the crest.

The surface roughness of the flank surface of the screw threaded portion is equal to or higher than the surface roughness of the crest. Therefore, the flank surface can plastically deform the inner peripheral surface of the pilot hole of the mating material without scraping to form the female screw, and the generation of chips can be suppressed.

As another embodiment of the present invention, metal plating having a Vickers hardness (Hv) of 350 or more, preferably 500 or more may be applied to at least the surface of the screw threaded portion.

According to the present embodiment, by metal plating, the surface roughness at the crest of the screw threaded portion is reduced and the surface hardness is increased. That is, the crest of the screw threaded portion becomes flat and hard. Therefore, the crest of the screw threaded portion can plastically deform the inner peripheral surface of the pilot hole of the mating material without scraping to form the female screw, and it is possible to suppress the generation of chips.

In particular, when the crest of the screw threaded portion has a Vickers hardness (Hv) of 350 or more, the crest of the screw threaded portion is harder than a steel material having a Vickers hardness (Hv) of 100 to 250. Therefore, since the metal plating itself formed on the screw threaded portion is not scraped, the female screw can be formed without generating chips.

As another embodiment of the present invention, metal plating having a nanoindentation hardness (HIT) of 3500 or more, preferably 5000 or more may be applied to at least the surface of the screw threaded portion.

According to the present embodiment, by metal plating, the surface roughness at the crest of the screw threaded portion is reduced and the surface hardness is increased. Therefore, the crest of the screw threaded portion can plastically deform the inner peripheral surface of the pilot hole of the mating material without scraping to form the female screw, and it is possible to suppress the generation of chips.

As a different embodiment of the present invention, the metal plating may be a nickel-based plating.

According to the present embodiment, corrosion of iron can be prevented.

In order to solve the above problem, a fastening structure of a tapping screw according to the present invention has a configuration in which the tapping screw is screwed into a pilot hole of a mating material to fix an object to be fastened.

According to the present invention, since the irregularities at the crest of the screw threaded portion are small, the female screw can be formed by plastically deforming the inner peripheral surface of the pilot hole of the mating material without scraping. Therefore, there is an effect that a fastening structure capable of fixing an object to be fastened while suppressing generation of chips is obtained.

As an embodiment of the present invention, the pilot hole of the mating material may be a burring hole.

According to the present embodiment, there is an effect that the holding strength of the tapping screw is increased.

### Brief Description of Drawings

Fig. 1 is a plan view of a tapping screw according to the present invention.
Fig. 2 is a front view of the tapping screw shown in Fig. 1.
Fig. 3 is a partial cross-sectional view of a mating material including a pilot hole for screwing a tapping screw.
Fig. 4 is an enlarged transverse sectional view of the tapping screw shown in Fig. 2.
Fig. 5 is a partially enlarged longitudinal sectional view of the tapping screw shown in Fig. 2.
Fig. 6 is a bar graph showing measurement results of Example 1.
Fig. 7 is a bar graph showing measurement results of Example 2.
Fig. 8 is a bar graph showing measurement results of Comparative Example.
Fig. 9 is a list summarizing measurement results.
Fig. 10 is a comparison table showing measurement results of Reference Example 2.
Fig. 11 is a comparison table showing measurement results of Reference Example 3.

### Description of Embodiments

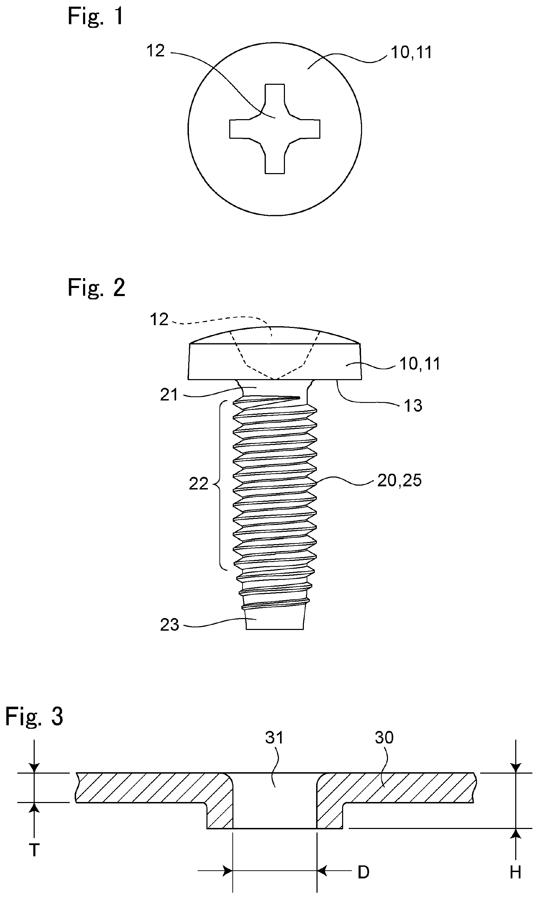

As shown in Figs. 1 and 2, a tapping screw according to the present invention is applied to a tapping screw 10 having a single-start thread, and includes a head 11 and a shank 20.

The tapping screw 10 is screwed into, for example, a burring hole which is a pilot hole 31 of the mating material 30 shown in Fig. 3.

As shown in Fig. 2, the head 11 has a cross recess 12 that can be tightened with a Phillips screwdriver on the upper surface of the binding head, and the shank 20 extends from the center of the bearing surface 13.

It should be noted that the shape of the head 11 is not limited to the binding head, and may be, for example, a truss head, a flat head, an oval head, a pan head, or a hexagon head, or may be with flange.

In addition, the head 11 is not limited to the cross recess 12, and may be provided with, for example, a slot, a slot and cross recess, a square socket, a hexagon socket, or a hexalobular socket.

As shown in Fig. 2, the shank 20 extends from the center of the bearing surface 13 of the head 11 and has a screw threaded portion 25 having a single-start thread. It should be noted that the tapping screw 10 is not limited to a single-start screw, and may be, for example, a double-start screw or a triple-start screw.

Then, the shank 20 is divided into an underhead portion 21, an intermediate portion 22, and a tip portion 23. The intermediate portion 22 is a region where the thread heights of the screw threaded portion 25 are aligned at the same height. The tip portion 23 is a region where the screw threaded portion 25 starts to be formed.

It should be noted that the tip portion 23 of the shank 20 has a circular truncated cone shape. However, the tip portion 23 is not limited to a circular truncated cone, and may be, for example, a cone shape or a dome shape, and can be appropriately selected as necessary.

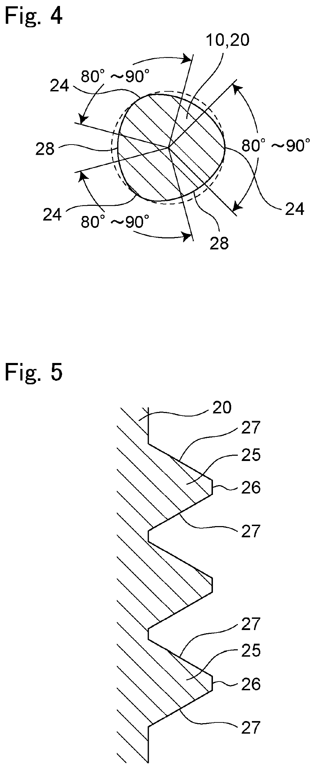

As shown in Fig. 4, a cross section of the shank 20 has what is called a rice ball shape (a substantially triangular cross-section having roundness). Then, in the cross section, the shank 20 has a corner portion 24 at a protruding position farthest outward from the axis, and has a side portion 28 between the adjacent corner portions 24 and 24.

In particular, in the shank 20 of the tapping screw 10 shown in Fig. 4, the corner portion 24 plays an important role in the screwing work. Therefore, it is preferable that the crest 26 positioned within a range of 80 degrees to 90 degrees centered on the corner portion 24 has surface roughness and surface hardness described below.

It should be noted that the shank 20 is not limited to have a substantially triangular cross section, and may have, for example, a circular cross section, a substantially quadrangular cross section, or a substantially hexagonal cross section.

As shown in Fig. 5, the screw threaded portion 25 formed on the shank 20 has a trapezoidal cross section and has a crest 26 being a series of the highest portions of the screw threaded portion 25. Flank surfaces 27 are formed on both sides of the crest 26.

It should be noted that since the screw threaded portion 25 having a trapezoidal cross section does not have a sharp crest unlike the screw threaded portion (not shown) having a triangular cross section, the crest is less likely to be scratched even during conveyance before the surface hardening treatment. Therefore, there is an advantage that the surface roughness of the crest is less likely to decrease and the chips are less likely to come out.

In addition, the angle of the screw threaded portion 25 formed by the flank surfaces 27 can be appropriately selected as necessary, and only needs to be, for example, 20 degrees to 75 degrees, preferably 50 degrees to 60 degrees. This is because if the angle is less than 20 degrees, it is difficult to manufacture the tapping screw itself, and a desired strength cannot be obtained, and if the angle exceeds 75 degrees, a desired fastening force cannot be obtained.

The screw threaded portion 25 forms a female screw by plastically deforming the inner peripheral surface of the pilot hole 31 of the mating material 30, rather than scraping the inner peripheral surface of the pilot hole 31 as in the conventional tapping screw. Therefore, the surface roughness of the screw threaded portion 25, particularly, the surface roughness of the crest 26 only needs to be a maximum height roughness (Rz) of 1.0 or less, and preferably 0.8 or less. This is because if the maximum height roughness (Rz) exceeds 1.0, chips are likely to be generated. It should be noted that the maximum height roughness (Rz) refers to a roughness based on a difference between the lowest recess and the highest protrusion in a predetermined range.

In addition, the surface roughness of the screw threaded portion 25, particularly the surface roughness of at least the crest 26 is an arithmetic mean roughness (Ra) of 0.2 or less. This is because if the arithmetic mean roughness (Ra) exceeds 0.3, chips are likely to be generated. It should be noted that the arithmetic mean roughness (Ra) refers to a roughness obtained by averaging differences in irregularities in a predetermined range.

In the conventional tapping screw, the surface roughness of the screw threaded portion has been large. In particular, the surface roughness at the crest of the screw threaded portion has been large, and sawtooth irregularities, so to speak, have been present. For this reason, in the conventional tapping screw, since the crest scrapes the inner peripheral surface of the pilot hole to form a female screw, it has not been possible to prevent generation of chips. On the other hand, in the tapping screw of the present invention, since the crest 26 having predetermined surface roughness and/or surface hardness forms a female screw by plastically deforming the inner peripheral surface of the pilot hole 31, there is an advantage that generation of chips can be suppressed.

In the surface of the tapping screw 10, at least the surface hardness at the crest 26 of the screw threaded portion 25 needs to be larger than the surface hardness of the inner peripheral surface of the pilot hole 31 provided in the mating material 30, that is, the surface hardness needs to be higher. This is because if the surface hardness at the crest 26 is smaller than the surface hardness of the pilot hole 31 of the mating material 30, the inner peripheral surface of the pilot hole 31 of the mating material 30 cannot be plastically deformed, and a female screw cannot be formed. The hardness difference from the mating material is preferably at least 250 or more as long as the hardness difference is in the Vickers hardness (Hv). This is because if the hardness difference is less than 250, the screw threaded portion of the tapping screw is deformed, and a complete female screw cannot be formed in the mating material.

For general steel materials, as a guideline in practical use, the surface hardness of the tapping screw 10 is preferably a Vickers hardness (Hv) of 350 or more, and preferably 500 or more. This is because if the Vickers hardness (Hv) is less than 350, a complete female screw cannot be formed in the mating material, and chips are likely to be generated.

More specifically, for example, in the case of a SUS steel sheet having a Vickers hardness (Hv) of 120, the surface hardness of the tapping screw is preferably a Vickers hardness (Hv) of 450 or more. This is because if it is less than 450, chips are likely to be generated.

In addition, when the mating material is, for example, a galvanized steel material having a Vickers hardness (Hv) of less than 190, the surface hardness of the tapping screw is preferably a Vickers hardness (Hv) of 450 or more.

Then, when the mating material is, for example, stainless steel having a Vickers hardness (Hv) of less than 220, the Vickers hardness (Hv) is preferably 500 or more.

Furthermore, when the mating material is, for example, high tensile strength steel having a Vickers hardness (Hv) of less than 320, the surface hardness of the tapping screw is preferably a Vickers hardness (Hv) of 600 or more.

Next, when the mating material is, for example, high tensile strength steel having a Vickers hardness (Hv) of less than 400, the surface hardness of the tapping screw is preferably a Vickers hardness (Hv) of 700 or more.

The material of the tapping screw can be selected according to the material of the mating material, and can be appropriately selected from, for example, carbon steel (SWCH 10 to 18A), SAE1022Si, SCM415, SUS410, and the like as necessary.

As a method for manufacturing the tapping screw 10, for example, the tapping screw is manufactured by applying cold forging, rolling, surface hardening treatment, smoothing treatment, and plating treatment to a linear material.

It should be noted that, in the method for manufacturing the tapping screw 10, it is needless to say that a manufacturing method using a sintered alloy or a 3D printer may be appropriately used in addition to cutting work, for example, instead of cold forging and/or rolling.

The cold forging is a step of cutting the linear material to a predetermined length and forming the head 11 and the shank 20.

The rolling is a step of forming a screw threaded portion 25 on the shank 20. By manufacturing by rolling, the flank surface 27 of the screw threaded portion 25 is reduced in surface roughness, and can be formed smoothly. However, by manufacturing by rolling, the crest 26 of the screw threaded portion 25 is likely to cause variations in surface roughness, which has caused generation of chips. Therefore, in the present application invention, treatment for improving the surface roughness of the crest 26 of the screw threaded portion 25 is performed.

The surface hardening treatment is a step of forming a hardened layer on the surface of the shank 20, particularly the screw threaded portion 25. Examples of the surface hardening treatment include carburization treatment, nitriding treatment, high frequency treatment, flame hardening treatment, and the like.

The smoothing treatment is a step for reducing the surface roughness of the screw threaded portion 25, in particular, the surface roughness of the crest 26. Examples of the smoothing treatment include barrel polishing, and electrolytic polishing, in addition to lapping in which a fluid containing a polishing agent is sprayed onto the surface of the shank 20 of the tapping screw 10 at a high pressure to polish the surface.

The plating treatment is a step for increasing the surface hardness of the tapping screw and improving the surface roughness. Examples of the plating treatment include not only nickel plating, zinc nickel alloy plating, and nickel-chromium composite plating, but also other metal plating such as hard chromium plating, nickel-cobalt alloy plating, nickel-phosphorus plating, electroless nickel-phosphorus plating, electroless nickel plating, Ni-P-SiC composite plating, rhodium plating, and ruthenium plating. By performing predetermined metal plating, there are advantages that the surface hardness can be increased and the surface roughness can be improved.

It should be noted that the smoothing treatment only needs to be performed as necessary, and is not necessarily required as long as a tapping screw having a desired surface roughness can be obtained by rolling treatment. In addition, the smoothing treatment may be performed as a pre-step or a post-step of the surface hardening treatment.

In addition, the plating treatment may be performed as necessary, and is not necessarily required as long as a tapping screw having desired surface roughness and surface hardness can be obtained by rolling treatment and surface hardening treatment.

As shown in Fig. 3, examples of the mating material 30 to be fastened include not only a metal plate single body such as a steel plate, but also, for example, a galvanized steel plate. The mating material 30 is provided with a pilot hole 31 for performing a screwing work. The pilot hole 31 only needs to be a through hole, and may be, for example, a drill hole, a punch hole, a shaving hole, a piercing hole, a burring hole, or an extrusion hole.

In particular, when the pilot hole 31 is a burring hole, there is an advantage that the holding strength of the tapping screw 10 is high. It should be noted that when a burring hole is provided as the pilot hole 31 in the plated metal plate, a plating material remains near the opening edge portion on the front surface side among the opening edge portions of the burring hole. However, since the basis material of the mating material 30 is exposed near the opening edge portion on the back surface side, it is considered that the plating material is less likely to fall as chips.

### Examples

### (Example 1)

As the tapping screw 10 of Example 1, 10 tapping screws made of SUS410 shown in Figs. 1, 2, 4, and 5 were used as samples. The outer dimensions of the sample are a total length of 10.5 mm, a head diameter of 5.3 mm, a head height of 2.5 mm, a shank diameter of 2.6 mm, and an underhead length of 8 mm, and the sample has a screw threaded portion having single-start thread and is subjected to nickel-chromium composite plating. However, lapping is not applied.

It should be noted that as nickel-chromium composite plating, a nickel-chromium composite plating layer having a film thickness of 5 µm or more was formed.

As the surface roughness of the screw threaded portion of the sample, the maximum height roughness (Rz) and the arithmetic mean roughness (Ra) of the screw threaded portion positioned at the 4th thread from the lower end were measured with a laser microscope (using a lens of VK-X1100 manufactured by KEYENCE CORPORATION at a magnification of 50 times).

It should be noted that the wavelength (λs) (2.5 µm or less) to be noise and the wavelength (λc) (80 µm or more) indicating undulation were cut off.

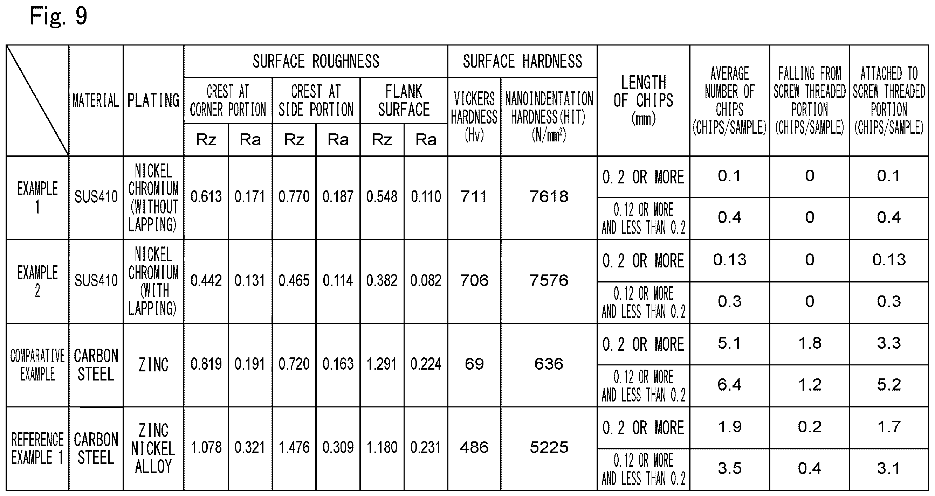

The measurement places were the crest 26 (measurement length 1200 µm) of the corner portion 24 and the crest 26 (measurement length 1200 µm) of the side portion 28. However, as for the surface roughness of the flank surface, the flank surface (measurement length 700 µm) obtained by dividing the shank of the sample into two and exposed was measured. The measurement results are shown in Fig. 9.

As the surface hardness of the sample, the Vickers hardness (Hv) was measured based on Japanese Industrial Standard JIS Z 2244, and the nanoindentation hardness (HIT) was measured based on ISO14577. The measurement results are shown in Fig. 9.

The Vickers hardness (Hv) was measured by pressing an indenter of a tester against the crest of the screw threaded portion with a measurement load of 50 g. The reason why the normal measurement load (300 g) was not used is that, when the indenter is pressed with a measurement load of 300 g, the deformation at the crest of the screw threaded portion becomes too large to be measured.

The nanoindentation hardness (HIT) was also measured by pressing an indenter of a tester against the crest of the screw threaded portion.

It should be noted that the reason why the Vickers hardness (Hv) and the nanoindentation hardness (HIT) were measured is that the influence of the hardness of the base material of the tapping screw was considered.

As a mating material, as shown in Fig. 3, a steel sheet having a thickness (T) of 0.8 mm, the steel sheet having front and back surfaces galvanized, the steel sheet provided with a burring hole having a height (H) of 1.5 mm and a hole diameter (D) of 2.3 mm was used as the sample.

For the object to be fastened, two washers having a thickness of 0.5 mm used for the M2.5 screw were prepared.

By fastening a tapping screw to the burring hole with an electric screwdriver at a rotation speed of 300 rpm until the tapping screw breaks, driving torque (hereinafter referred to as "DT") and stripping torque (hereinafter referred to as "ST") were measured.

The driving torque DT was 0.41 Nm, the stripping torque ST was 1.7 Nm, and the torque ratio was 4.2. Since the required torque ratio is 2.5 in practical use, it was confirmed that there was no practical problem in Example 1.

The chips generated by the fastening work were collected, classified by size, and the number of chips was totaled.

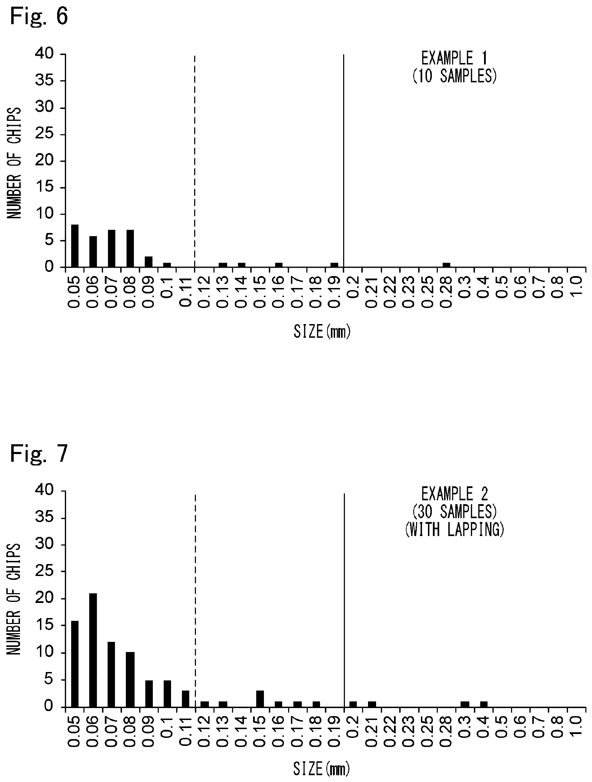

The chips include chips falling from the screw threaded portion of the tapping screw during the fastening work and chips attached to the screw threaded portion of the tapping screw, and these chips were collected separately. Then, the number of chips per length was totaled. The totaled result is shown as a bar graph in Fig. 6.

The total number of chips that could be collected was 36 in total with 10 samples.

Of the collected chips, chips having a length of 0.05 mm or more could not be found with a microscope among the chips falling from the screw threaded portion.

In addition, of the chips attached to the screw threaded portion, the number of chips having a length of 0.12 mm or more and less than 0.2 mm was 4 in total, and the number of chips having a length of 0.2 mm or more was 1 in total.

Therefore, the average number of chips having a length of 0.12 mm or more and less than 0.2 mm generated per sample was 0.4/sample, and the average number of chips having a length of 0.2 mm or more was 0.1/sample. The calculation results are shown in a list in Fig. 9.

### (Example 2)

As the tapping screw according to Example 2, 30 samples manufactured in the same manner as in Example 1 except that lapping was applied were prepared.

The lapping was subjected to mirror finishing by a mirror finishing apparatus (manufactured by Yamashita Works Co., Ltd.).

As for the surface roughness of the sample, as in Example 1, the crest of the corner portion, the crest of the side portion, and the flank surface were measured. In addition, as for the surface hardness of the sample, as in Example 1, the Vickers hardness (Hv) and the nanoindentation hardness (HIT) were measured. The measurement results are shown in Fig. 9.

For the mating material, samples having the same material and the same shape as those of Example 1 were prepared.

For the object to be fastened, two washers identical to those of Example 1 were used.

By fastening a tapping screw to the burring hole with an electric screwdriver at a rotation speed of 300 rpm until the tapping screw breaks, driving torque DT and stripping torque ST were measured.

The driving torque DT was 0.29 Nm, the stripping torque ST was 1.70 Nm, and the torque ratio was 5.9. Since the required torque ratio is 2.5 in practical use, it was confirmed that there was no practical problem in Example 2**.**

The chips generated during the work were collected as in Example 1, classified for each length of the chips, and the number of chips was totaled.

The number of totaled chips per length is shown as a bar graph in Fig. 7**.** It should be noted that the number of chips shown in Fig. 7 is the total number of chips generated from 30 samples.

The total number of chips generated was 84 in total with 30 samples.

However, of the collected chips, chips having a length of 0.05 mm or more could not be found with a microscope among the chips falling from the screw threaded portion.

In addition, of the chips attached to the screw threaded portion, the number of chips having a length of 0.12 mm or more and less than 0.2 mm was 9 in total, and the number of chips having a length of 0.2 mm or more was 4 in total.

Therefore, the average number of chips having a length of 0.12 mm or more and less than 0.2 mm generated per sample was 0.3/sample, and the average number of chips having a length of 0.2 mm or more was 0.13/sample. The calculation results are shown in a list in Fig. 9.

### (Comparative Example)

As the tapping screw of Comparative Example, carbon steel was used as a material thereof, and 10 samples subjected to galvanization after cold forging, rolling, and heat treatment were prepared. However, lapping is not applied.

As for the surface roughness of the sample, as in Example 1, the crest of the corner portion, the crest of the side portion, and the flank surface were measured. In addition, as for the surface hardness of the sample, as in Example 1, the Vickers hardness (Hv) and the nanoindentation hardness (HIT) were measured. The measurement results are shown in Fig. 9.

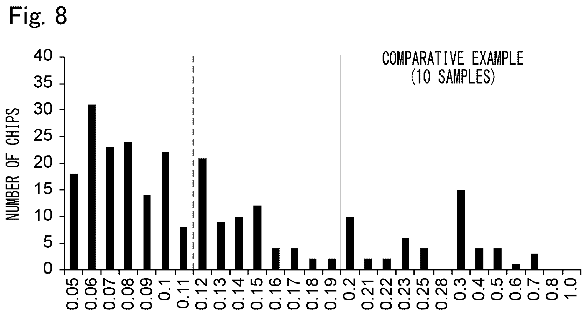

Then, fastening work was performed on the pilot hole of the mating material under the same conditions as in Examples 1 and 2, the generated chips were collected and classified for each length, and the number of chips per length was totaled. The totaled result is shown as a bar graph in Fig. 8.

It should be noted that the driving torque DT was 0.16 Nm, the stripping torque ST was 0.97 Nm, and the torque ratio was 6.1. Since the required torque ratio is 2.5 in practical use, it was confirmed that there was no practical problem in Comparative Example.

The total number of chips generated was 255 in total with 10 samples.

Then, of the chips falling from the screw threaded portion, the number of chips having a length of 0.12 mm or more and less than 0.2 mm was 12, and the number of chips having a length of 0.2 mm or more was 18.

In addition, of the chips attached to the screw threaded portion, the number of chips having a length of 0.12 mm or more and less than 0.2 mm was 52 in total, and the number of chips having a length of 0.2 mm or more was 33 in total.

Therefore, the average number of chips having a length of 0.12 mm or more and less than 0.2 mm generated per sample was 6.4/sample, and the average number of chips having a length of 0.2 mm or more was 5.1/sample. The calculation results are shown in a list in Fig. 9.

In addition to the above test results, from the results of analyzing the components of the chips, it was found that not only the galvanized layer of the tapping screw is broken, but also the inner peripheral surface basis material of the pilot hole is scraped to generate chips.

### (Reference Example 1)

Ten samples having a surface subjected to zinc-nickel alloy plating and manufactured with the same material and the same outer dimensions as in Example 1 were prepared. However, lapping is not applied.

As for the surface roughness of the sample, as in Example 1, the crest of the corner portion, the crest of the side portion, and the flank surface were measured. In addition, as for the surface hardness of the sample, as in Example 1, the Vickers hardness (Hv) and the nanoindentation hardness (HIT) were measured. The measurement results are shown in Fig. 9.

The fastening work was performed under the same conditions as in Example 1, and the driving torque and the stripping torque were measured.

The driving torque DT was 0.20 Nm, the stripping torque ST was 1.10 Nm, and the torque ratio was 5.5. Since the required torque ratio is 2.5 in practical use, it was confirmed that there was no practical problem in Reference Example 1.

Furthermore, as in Examples 1 and 2, the chips generated during the work were collected, classified for each length, and the number of chips was totaled.

Of the chips falling, the number of chips having a length of 0.12 mm or more and less than 0.2 mm was 4, and the number of chips having a length of 0.2 mm or more was 2.

Of the chips attached to the screw threaded portion, the number of chips having a length of 0.12 mm or more and less than 0.2 mm was 31, and the number of chips having a length of 0.2 mm or more was 17.

Therefore, the average number of chips having a length of 0.12 mm or more and less than 0.2 mm generated per sample was 3.5/sample, and the average number of chips having a length of 0.2 mm or more was 1.9/sample. The totaled results are shown in a list in Fig. 9.

As shown in a list in Fig. 9, when comparing with the total number of chips having a length of 0.12 mm or more and less than 0.2 mm and the total number of chips having a length of 0.2 mm or more as a reference, it was found that the number of chips in any of Example 1 and Example 2 was significantly smaller than that in Comparative Example. From this result, it was found that, when the surface roughness of the crest of the screw threaded portion is set to the maximum height roughness (Rz) of 0.80 or less, the arithmetic mean roughness (Ra) of 0.19 or less, the Vickers hardness (Hv) of 700 or more, and the nanoindentation hardness (HIT) of 7500 or more, not only the total number of chips but also the generation of large chips can be remarkably reduced.

It was found that despite the fact that the surface roughness of Reference Example 1 is larger than the surface roughness of Comparative Example and the surface is rougher, when the surface hardness at the crest of the screw threaded portion is the Vickers hardness (Hv) of 486, the size and number of generated chips can be reduced. Therefore, it was found that the generation of chips can be suppressed when the surface hardness is set to a Vickers hardness (Hv) of 486 or more.

### (Reference Example 2)

In any of the measurements of the Vickers hardness (Hv) according to Example 1, Example 2, Comparative Example, and Reference Example 1, the indenter of the tester was pressed against the crest of the screw threaded portion of the tapping screw with a measurement load of 50 g and the measurements were made.

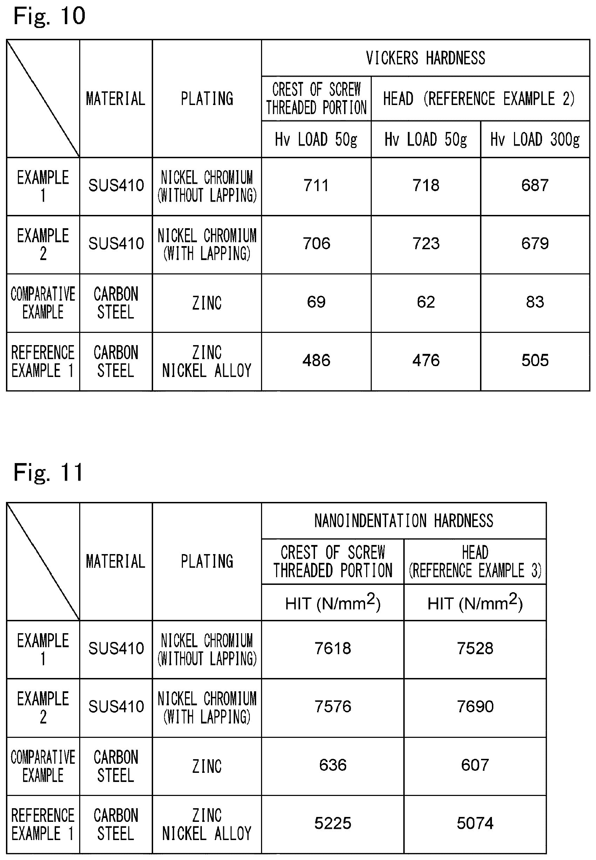

On the other hand, in Reference Example 2, the measurement was made by pressing the indenter of the tester against the head of the tapping screw with a measurement load of 50 g and a measurement load of 300 g. The measurement results are shown in Fig. 10.

As is clear from Fig. 10, when the measurement load is 50 g, it was confirmed that the Vickers hardness (Hv) at the crest of the screw threaded portion is substantially equal to the Vickers hardness (Hv) at the head. Therefore, it is considered that the measurement of the Vickers hardness (Hv) at the crest of the screw threaded portion difficult to measure can be substituted with measuring the head easy to measure.

In addition, it was found that the Vickers hardness (Hv) at the crest of the screw threaded portion measured with a measurement load of 50 g is an approximate numerical value also to the Vickers hardness (Hv) at the head measured with a measurement load of 300 g. Therefore, it is considered that there is no problem in practical use even if the measurement of the Vickers hardness (Hv) at the crest of the screw threaded portion difficult to measure is substituted with measuring the head with a normal measurement load (300 g).

### (Reference Example 3)

In any of the measurements of the nanoindentation hardness (HIT) according to Example 1, Example 2, Comparative Example, and Reference Example 1, the indenter of the tester was pressed against the crest of the screw threaded portion of the tapping screw and the measurements were made. On the other hand, in Reference Example 3, the measurement was made by pressing the indenter of the tester against the head of the tapping screw. The measurement results are shown in Fig. 11.

As is clear from Fig. 11, in any of Examples 1 and 2, Comparative Example, and Reference Example 1, it was confirmed that the nanoindentation hardness (HIT) at the crest of the screw threaded portion and the nanoindentation hardness (HIT) at the head were almost the same numerical values. Therefore, it is considered that the measurement of the nanoindentation hardness (HIT) at the crest of the screw threaded portion difficult to measure can be substituted with measuring the head easy to measure.

From the above test results, it was found that by setting the surface roughness of the shank, particularly, the maximum height roughness (Rz) to 0.8 or less and the arithmetic mean roughness (Ra) to 0.2 or less, the chips can be remarkably reduced.

In addition, it was found that by setting the surface hardness to the Vickers hardness (Hv) of 486 or more, not only the number of generated chips can be effectively suppressed, but also the generated chips can be reduced in size.

In addition, Example 1 in which lapping was not applied was compared with Example 2 in which lapping was applied, but there appeared no significant difference in the total number of chips between Example 1 and Example 2.

However, it was found that in Example 2 subjected to lapping, in the surface roughness, the maximum height roughness (Rz) was more improved than that of Example 1. Then, when the size of the generated chips was closely observed, it was found that the size of the chips of Example 2 was relatively smaller than that of Example 1. It is considered that this is because, among the irregularities present on the surface of the crest by the lapping, particularly large irregularities are reduced by the lapping, so that the generated chips are reduced in size.

### Industrial Applicability

The present application invention is not limited to the tapping screw described above, and can be naturally applied to tapping screws having other shapes used in the fields of precision devices such as cameras and mobile phones, in-vehicle electronic apparatuses, and the like.

### Reference Signs List

- 10: tapping screw
- 11: head
- 12: recess
- 20: shank
- 21: underhead portion
- 22: Intermediate portion
- 23: tip portion
- 24: corner portion
- 25: screw threaded portion
- 26: crest
- 27: flank surface
- 28: side portion
- 30: mating material
- 31: pilot hole (burring hole)

## Claims

1. A tapping screw (10) to be screwed into a pilot hole (31) of a mating material (30), the tapping screw (10) comprising:
a head (11); and
a shank (20) including a screw threaded portion (25) having at least a single-start thread,
wherein a surface roughness at least at a crest (26) of the screw threaded portion (25) is set to a maximum height roughness (Rz) of 1.0 µm or less, preferably 0.8 µm or less, and
wherein a surface roughness at least at a crest (26) of a screw threaded portion (25) is set to an arithmetic mean roughness (Ra) equal to or less than 0.2 µm.

2. The tapping screw (10) according to claim 1, wherein a surface hardness at least at a crest (26) of a screw threaded portion (25) is larger than a surface hardness at an inner peripheral surface of a pilot hole (31) of a mating material (30).

3. The tapping screw (10) according to any one of claims 1 to 2, wherein a surface hardness at least at a crest (26) of a screw threaded portion (25) is a Vickers hardness (Hv) of 350 or more, preferably 500 or more.

4. The tapping screw (10) according to any one of claims 1 to 3, wherein a surface hardness at least at a crest (26) of a screw threaded portion (25) is a nanoindentation hardness (HIT) of 3500 or more, preferably 5000 or more.

5. The tapping screw (10) according to any one of claims 1 to 4, wherein, in a crest (26) of a screw threaded portion (25) having a shank (20) with a substantially triangular cross section, a surface roughness in at least a corner portion (24) is set to a maximum height roughness (Rz) of 1.0 µm or less, preferably 0.8 µm or less, and
wherein, in a crest (26) of a screw threaded portion (25) having a shank (20) with a substantially triangular cross section, a surface roughness in at least a corner portion (24) is set to an arithmetic mean roughness (Ra) of 0.2 µm or less.

6. The tapping screw (10) according to any one of claims 1 to 5, wherein, in a crest (26) of a screw threaded portion (25) having a shank (20) with a substantially triangular cross section, a surface hardness in at least a corner portion (24) is set to a Vickers hardness (Hv) of 350 or more, preferably 500 or more.

7. The tapping screw (10) according to any one of claims 1 to 6, wherein, in a crest (26) of a screw threaded portion (25) having a shank (20) with a substantially triangular cross section, a surface hardness in at least a corner portion (24) is set to a nanoindentation hardness (HIT) of 3500 or more, preferably 5000 or more.

8. The tapping screw (10) according to any one of claims 1 to 7, wherein a surface roughness of a flank surface (27) of a screw threaded portion (25) is equal to or higher than a surface roughness of a crest (26).

9. The tapping screw (10) according to any one of claims 1 to 8, wherein at least a surface of a screw threaded portion (25) is metal-plated with a Vickers hardness (Hv) of 350 or more, preferably 500 or more.

10. The tapping screw (10) according to any one of claims 1 to 9, wherein at least a surface of a screw threaded portion (25) is metal-plated with a nanoindentation hardness (HIT) of 3500 or more, preferably 5000 or more.

11. The tapping screw (10) according to claim 9 or 10, wherein metal plating is nickel-based plating.

12. A fastening structure comprising:
the tapping screw (10) according to any one of claims 1 to 11;
a mating material (30); and
an object to be fastened,
wherein the tapping screw (10) is screwed into a pilot hole (31) of the mating material (30) to fix the object to be fastened.

13. The fastening structure according to claim 12, wherein a pilot hole (31) of a mating material (30) is a burring hole.

## Patentansprüche

1. Eine Gewindebohrschraube (10) zum Einschrauben in ein Vorloch (31) eines Gegenmaterials (30), wobei die Gewindebohrschraube (10) umfasst:
einen Kopf (11); und
einen Schaft (20), der einen Gewindeabschnitt (25) mit mindestens einem eingängigen Gewinde aufweist,
wobei eine Oberflächenrauheit zumindest an einer Gewindespitze (26) des Gewindeabschnitts (25) auf eine maximale Rauheitshöhe (Rz) von 1,0 µm oder weniger, vorzugsweise 0,8 µm oder weniger, eingestellt ist, und
wobei eine Oberflächenrauheit zumindest an einer Gewindespitze (26) eines Gewindeabschnitts (25) auf einen arithmetischen Mittenrauwert (Ra) von 0,2 µm oder weniger eingestellt ist.

2. Gewindebohrschraube (10) nach Anspruch 1, wobei eine Oberflächenhärte zumindest an einer Gewindespitze (26) eines Gewindeabschnitts (25) größer ist als eine Oberflächenhärte an einer inneren Umfangsfläche eines Vorlochs (31) eines Gegenmaterials (30).

3. Gewindebohrschraube (10) nach einem der Ansprüche 1 bis 2, wobei eine Oberflächenhärte zumindest an einer Gewindespitze (26) eines Gewindeabschnitts (25) eine Vickershärte (Hv) von 350 oder mehr, vorzugsweise 500 oder mehr, ist.

4. Gewindebohrschraube (10) nach einem der Ansprüche 1 bis 3, wobei eine Oberflächenhärte zumindest an einer Gewindespitze (26) eines Gewindeabschnitts (25) eine Nanoindentationshärte (HIT) von 3500 oder mehr, vorzugsweise 5000 oder mehr, ist.

5. Gewindebohrschraube (10) nach einem der Ansprüche 1 bis 4, wobei bei einer Gewindespitze (26) eines Gewindeabschnitts (25) mit einem Schaft (20) mit im Wesentlichen dreieckigem Querschnitt eine Oberflächenrauheit zumindest in einem Eckabschnitt (24) auf eine maximale Rauheitshöhe (Rz) von 1,0 µm oder weniger, vorzugsweise 0,8 µm oder weniger, eingestellt ist, und
wobei bei einer Gewindespitze (26) eines Gewindeabschnitts (25) mit einem Schaft (20) mit im Wesentlichen dreieckigem Querschnitt eine Oberflächenrauheit zumindest in einem Eckabschnitt (24) auf einen arithmetischen Mittenrauwert (Ra) von 0,2 µm oder weniger eingestellt ist.

6. Gewindebohrschraube (10) nach einem der Ansprüche 1 bis 5, wobei bei einer Gewindespitze (26) eines Gewindeabschnitts (25) mit einem Schaft (20) mit im Wesentlichen dreieckigem Querschnitt eine Oberflächenhärte zumindest in einem Eckabschnitt (24) auf eine Vickershärte (Hv) von 350 oder mehr, vorzugsweise 500 oder mehr, eingestellt ist.

7. Gewindebohrschraube (10) nach einem der Ansprüche 1 bis 6, wobei bei einer Gewindespitze (26) eines Gewindeabschnitts (25) mit einem Schaft (20) mit im Wesentlichen dreieckigem Querschnitt eine Oberflächenhärte zumindest in einem Eckabschnitt (24) auf eine Nanoindentationshärte (HIT) von 3500 oder mehr, vorzugsweise 5000 oder mehr, eingestellt ist.

8. Gewindebohrschraube (10) nach einem der Ansprüche 1 bis 7, wobei eine Oberflächenrauheit einer Flankenfläche (27) eines Gewindeabschnitts (25) gleich oder größer ist als eine Oberflächenrauheit einer Gewindespitze (26).

9. Gewindebohrschraube (10) nach einem der Ansprüche 1 bis 8, wobei zumindest eine Oberfläche eines Gewindeabschnitts (25) metallbeschichtet ist mit einer Vickershärte (Hv) von 350 oder mehr, vorzugsweise 500 oder mehr.

10. Gewindebohrschraube (10) nach einem der Ansprüche 1 bis 9, wobei zumindest eine Oberfläche eines Gewindeabschnitts (25) metallbeschichtet ist mit einer Nanoindentationshärte (HIT) von 3500 oder mehr, vorzugsweise 5000 oder mehr.

11. Gewindebohrschraube (10) nach Anspruch 9 oder 10, wobei die Metallbeschichtung eine Beschichtung auf Nickelbasis ist.

12. Eine Befestigungsstruktur, umfassend:
die Gewindebohrschraube (10) nach einem der Ansprüche 1 bis 11;
ein Gegenmaterial (30); und
ein zu befestigendes Objekt,
wobei die Gewindebohrschraube (10) in ein Vorloch (31) des Gegenmaterials (30) eingeschraubt wird, um das zu befestigende Objekt zu befestigen.

13. Befestigungsstruktur nach Anspruch 12,
wobei ein Vorloch (31) eines Gegenmaterials (30) ein Durchzug ist.

## Revendications

1. Une vis taraudeuse (10) à être vissée dans un trou pilote (31) d'un matériau d'accouplement (30), la vis taraudeuse (10) comprenant :
une tête (11) ; et
une tige (20) comprenant une portion filetée de vis (25) ayant au moins un filet à simple entrée,
dans laquelle une rugosité de surface au moins au sommet (26) de la portion filetée de vis (25) est réglée à une rugosité de hauteur maximale (Rz) de 1,0 µm ou moins, de préférence 0,8 µm ou moins, et
dans laquelle une rugosité de surface au moins au sommet (26) d'une portion filetée de vis (25) est réglée à une rugosité moyenne arithmétique (Ra) égale ou inférieure à 0,2 µm.

2. La vis taraudeuse (10) selon la revendication 1, dans laquelle une dureté de surface au moins au sommet (26) d'une portion filetée de vis (25) est supérieure à une dureté de surface au niveau d'une surface périphérique interne d'un trou pilote (31) d'un matériau d'accouplement (30).

3. La vis taraudeuse (10) selon l'une quelconque des revendications 1 à 2, dans laquelle une dureté de surface au moins au sommet (26) d'une portion filetée de vis (25) est une dureté Vickers (Hv) de 350 ou plus, de préférence 500 ou plus.

4. La vis taraudeuse (10) selon l'une quelconque des revendications 1 à 3, dans laquelle une dureté de surface au moins au sommet (26) d'une portion filetée de vis (25) est une dureté de nanoindentation (HIT) de 3500 ou plus, de préférence 5000 ou plus.

5. La vis taraudeuse (10) selon l'une quelconque des revendications 1 à 4, dans laquelle, dans un sommet (26) d'une portion filetée de vis (25) ayant une tige (20) avec une section transversale sensiblement triangulaire, une rugosité de surface dans au moins une portion d'angle (24) est réglée à une rugosité de hauteur maximale (Rz) de 1,0 µm ou moins, de préférence 0,8 µm ou moins, et
dans laquelle, dans un sommet (26) d'une portion filetée de vis (25) ayant une tige (20) avec une section transversale sensiblement triangulaire, une rugosité de surface dans au moins une portion d'angle (24) est réglée à une rugosité moyenne arithmétique (Ra) de 0,2 µm ou moins.

6. La vis taraudeuse (10) selon l'une quelconque des revendications 1 à 5, dans laquelle, dans un sommet (26) d'une portion filetée de vis (25) ayant une tige (20) avec une section transversale sensiblement triangulaire, une dureté de surface dans au moins une portion d'angle (24) est réglée à une dureté Vickers (Hv) de 350 ou plus, de préférence 500 ou plus.

7. La vis taraudeuse (10) selon l'une quelconque des revendications 1 à 6, dans laquelle, dans un sommet (26) d'une portion filetée de vis (25) ayant une tige (20) avec une section transversale sensiblement triangulaire, une dureté de surface dans au moins une portion d'angle (24) est réglée à une dureté de nanoindentation (HIT) de 3500 ou plus, de préférence 5000 ou plus.

8. La vis taraudeuse (10) selon l'une quelconque des revendications 1 à 7, dans laquelle une rugosité de surface d'une surface de flanc (27) d'une portion filetée de vis (25) est égale ou supérieure à une rugosité de surface d'un sommet (26).

9. The vis taraudeuse (10) selon l'une quelconque des revendications 1 à 8, dans laquelle au moins une surface d'une portion filetée de vis (25) est revêtue par dépôt métallique avec une dureté Vickers (Hv) de 350 ou plus, de préférence 500 ou plus.

10. The vis taraudeuse (10) selon l'une quelconque des revendications 1 à 9, dans laquelle au moins une surface d'une portion filetée de vis (25) est revêtue par dépôt métallique avec une dureté de nanoindentation (HIT) de 3500 ou plus, de préférence 5000 ou plus.

11. La vis taraudeuse (10) selon la revendication 9 ou 10, dans laquelle le dépôt métallique est un dépôt à base de nickel.

12. Une structure de fixation comprenant :
la vis taradeuse (10) selon l'une quelconque des revendications
un matériau d'accouplement (30) ; et
un objet à fixer,
dans laquelle la vis taraudeuse (10) est vissée dans un trou pilote (31) du matériau d'accouplement (30) afin de fixer l'objet à fixer.

13. The structure de fixation selon la revendication 12, dans laquelle un trou pilote (31) d'un matériau d'accouplement (30) est un trou de bouterollage.
